# FASCICULE DE BREVET EUROPEEN

(11) **EP 4 379 486 B1**
(45) Date de publication et mention de la délivrance du brevet: **31.12.2025**
(21) Numéro de dépôt: 23208175.2
(22) Date de dépôt: 07.11.2023
(51) Int. Cl.: G05B 23/02, G07C 5/00

(54) **PROCÉDÉ DE MAINTENANCE PRÉDICTIVE FRUGALE, PRODUIT PROGRAMME D'ORDINATEUR ET SUPPORT LISIBLE PAR ORDINATEUR CORRESPONDANTS**
FRUGALES PRÄDIKTIVES WARTUNGSVERFAHREN, ENTSPRECHENDES COMPUTERPROGRAMMPRODUKT UND COMPUTERLESBARES MEDIUM
METHOD FOR FRUGAL PREDICTIVE MAINTENANCE, CORRESPONDING COMPUTER PROGRAM PRODUCT AND COMPUTER-READABLE MEDIUM

(30) Priorité: 02.12.2022 FR 2212542
(43) Date de publication de la demande: 05.06.2024
(73) Titulaire: KNDS France, 78034 Versailles Cedex (FR)
(72) Inventeur: BARTHELON, Pascal, 18023 Bourges (FR); MOUTIER, Jérôme, 18023 Bourges (FR); FORNOS, Michel, 18023 Bourges (FR); GUILLET, Rémy, 18023 Bourges (FR); GARRIVET, Michel, 18023 Bourges (FR)
(74) Mandataire: Cabinet Chaillot

(56) Documents cités:
- EP-A1- 3 809 220
- US-A1- 2018 257 683
- US-A1- 2022 269 259

## Description

Le domaine technique de l'invention est celui de la maintenance d'un parc de machines, en particulier mais non exclusivement des véhicules, la présente invention concernant plus particulièrement un procédé de maintenance prédictive frugale d'un parc de machines, un produit programme d'ordinateur et un support lisible par ordinateur correspondants.

La maintenance d'un parc de machines, en particulier d'un parc hétérogène de machines, est facilitée par des procédés de maintenance prédictive qui permettent de remplacer des pièces avant une éventuelle panne, diminuant ainsi les coûts de réparation induits par des conséquences de la panne et les temps d'immobilisation des machines du parc de machines.

Les techniques actuelles de maintenance prédictive de parcs de machines dans l'industrie se divisent en deux grandes méthodes :
- une approche centrée sur les données (en anglais « Data Driven ») dans laquelle des données de capteurs placés sur les machines sont collectées et traitées par des algorithmes d'apprentissage machine. Ces derniers ont pour objectif de faire ressortir des motifs communs permettant de prédire une panne,
- une approche centrée sur un modèle (en anglais « Model Driven »), laquelle est basée sur la notion de simulation multi-physique et sur un plan d'instrumentation dont l'objectif est de définir des seuils et donc une prédiction en fonction de la durée de vie et des contraintes occasionnées par l'environnement extérieur (vibrations, température, ...).

L'approche centrée sur les données nécessite à elle seule une grande quantité de données qui doivent être correctement corrélées aux faits techniques afin de réaliser une prédiction. Dans le domaine particulier des parcs de véhicules militaires, il y peu de véhicules dans les parcs et les taux d'utilisation sont faibles par rapport à un véhicule d'un parc de véhicules civils. L'approche centrée sur les données, qui fonctionne dans le domaine civil, est donc difficilement transposable dans le domaine militaire. Pour obtenir une prédiction fiable, il faudrait plusieurs années d'enregistrements et plusieurs récurrences de pannes, ce qui n'est pas compatible avec un plan de déploiement rapide.

L'approche centrée sur un modèle est quant à elle adaptée dans une approche de type « chaîne fonctionnelle » car les témoins d'usure sont représentatifs de l'élément mis sous surveillance. Cette approche est toutefois limitée pour corréler des impacts d'usure ou vieillissement d'un sous-ensemble sur un autre sous-ensemble. De plus, toujours pour le domaine militaire, les profils d'emploi des véhicules sont difficiles à modéliser du fait du côté peu régulier voire anarchique lié à l'utilisation des véhicules militaires. L'approche centrée sur un modèle est donc une approche intéressante, mais qui se révèle insuffisante pour obtenir une prédiction fiable, en particulier dans le domaine militaire.

La demande de brevet américain US2022/269259 A1 décrit un procédé de maintenance prédictive pour un dispositif dans l'industrie des denrées alimentaire. La demande de brevet américain US2018257683 A1 décrit un système de surveillance de sous-système de véhicule. La demande de brevet français FR3092057 décrit un procédé de maintenance prédictive appliqué à l'automobile et basé sur une approche centrée sur un modèle.

La présente invention vise à associer le meilleur des deux approches, centrées sur les données et sur un modèle, pour pallier les limites indiquées ci-dessus.

La présente invention a donc pour objet un procédé de maintenance prédictive pour un parc de machines homogène, les machines du parc de machines étant d'un même type de machine donné, le procédé comprenant les étapes consistant à :
a) identifier, pour le type de machine donné, au moins une partie de machine à surveiller qui est affectée par l'usure de la machine,
b) identifier l'ensemble des paramètres mesurables de l'au moins une partie de machine à surveiller,
c) modéliser un jumeau numérique du type de machine donné comprenant un modèle numérique de l'au moins une partie de machine à surveiller et,
sur une machine dite d'entraînement du type de machine donné ayant un degré d'usure prédéterminé :
d) disposer des capteurs pour mesurer chaque paramètre mesurable de l'ensemble des paramètres mesurables de l'au moins une partie de machine à surveiller,
e) simuler un ensemble d'incidents prédéterminés sur la machine d'entraînement et relever les données de mesure des capteurs pour chaque incident prédéterminé,
f) enrichir le jumeau numérique avec les données de mesure des capteurs pour chaque incident prédéterminé de l'ensemble d'incidents prédéterminés,
g) définir, pour chaque incident prédéterminé simulé de l'ensemble d'incidents prédéterminés, un seuil de détection,
h) identifier parmi les capteurs, pour chaque incident prédéterminé simulé de l'ensemble d'incidents prédéterminés, un groupe de capteurs dits de maintenance permettant de détecter le seuil de détection avec une probabilité prédéterminée,
i) équiper l'ensemble des machines du parc de machines du groupe de capteurs de maintenance,
j) relever périodiquement les données de mesure du groupe de capteurs de maintenance équipant chaque machine du parc de machines pour enrichir le jumeau numérique,
k) pour chaque machine du parc de machines, relever périodiquement les données de mesure du groupe de capteurs de maintenance l'équipant et appliquer les données de mesure au jumeau numérique pour déduire un besoin de maintenance.

Le procédé de l'invention est frugal car il nécessite peu de données et utilise un modèle d'intelligence artificielle (IA) ou un modèle algorithmique pour traiter ces données et parvenir ainsi à la frugalité. Contrairement au modèle dominant d'intelligence artificielle (IA) qui repose sur l'apprentissage profond ou l'apprentissage machine, l'IA frugale ne nécessite pas de grands volumes de données pour entraîner son modèle. Le procédé de maintenance prédictive frugale selon la présente invention est capable d'apprendre à partir de très peu de données. A travers l'IA frugale, l'invention vise à réussir à initier, aux étapes d) à h) un modèle suffisamment performant dans un premier temps et ensuite à apprendre en continu, à l'étape j), au fil des interactions homme-machine. L'acquisition de données ne se fait donc plus uniquement en amont de la mise en place de la maintenance prédictive, mais sur un temps long, et avec l'avantage de ne pas avoir à mobiliser d'importantes ressources humaines expertes.

Les capteurs peuvent être tous types de capteurs. Ils peuvent contenir de la mémoire interrogeable en atelier, par voie filaire ou sans fil, ou à distance, et/ou peuvent être associés à des systèmes de communication pour transmettre les données mesurées, soit à intervalles réguliers, soit sur demande. Ainsi, des réseaux bas débit de type SigFox^{®} ou LoRa^{®} ou analogues peuvent être utilisés pour remonter les données mesurées des capteurs au jumeau numérique où elles sont injectées pour améliorer le jumeau numérique. Ces transmissions pourront, de préférence, être chiffrées. Selon l'invention, il est également envisagé, notamment lors des étapes f) et j), de remonter les données vers le jumeau numérique à haut débit pour donner une quantité maximale de données au jumeau numérique.

Le procédé proposé permet d'avoir un jumeau numérique unique à l'image des machines faisant partie du parc de machines. Ce jumeau numérique est continuellement enrichi avec des retours d'informations selon une approche similaire à une approche centrée sur les données. Le procédé de l'invention permet donc, par rapport aux procédés existants, d'améliorer l'inférence du procédé.

Le procédé de l'invention permet d'obtenir un état de santé en temps réel de chaque machine du parc de machines. Lorsque les machines sont des véhicules, il permet aussi de réaliser une aide à la conduite, en indiquant au conducteur les meilleures pratiques de conduite pour limiter l'usure en fonction du comportement du jumeau numérique. Le procédé permet également de savoir si un véhicule donné peut être exploité et sur quelle durée et selon quelles conditions, notamment pour engager une mission pour terminer une mission.

La partie de machine à surveiller peut être tout ensemble ou sous-ensemble de la machine, tout composant ou groupe de composants, toute chaîne fonctionnelle ou groupe de chaînes fonctionnelles.

Lorsque la machine est un véhicule, la partie de machine à surveiller peut être, notamment mais non exclusivement : un ensemble ou sous-ensemble mécanique tel que moteur, partie de moteur, train roulant, essieu, pneu, chenille, transmission, boîte de vitesse, système de freinage, système d'arme, circuit de chauffage, climatisation, ouverture/fermeture d'ouvrants, un ensemble ou sous-ensemble hydraulique tel que liquide de frein, circuit hydraulique, liquide de refroidissement, circuit d'huile, circuit de carburant, un ensemble ou sous-ensemble électrique ou électronique tel qu'électronique embarquée, circuit de batterie, système de phares, alimentation électrique d'un composant spécifique. En particulier, les parties de machine disposant déjà de capteurs pourront être utilisées. L'invention n'est toutefois pas limitée à cet égard puisqu'elle prévoit de disposer des capteurs pour mesurer des paramètres mesurables, même lorsque la machine n'en est pas équipée par défaut.

Par paramètre mesurable, on entend toute grandeur physique mesurable par un capteur.

Les parties à mesurer ainsi que les paramètres à mesurer sont choisis en fonction de plusieurs facteurs de criticité. Une approche de type Fiabilité - Maintenabilité - Disponibilité - Sécurité (FMDS) pourra par exemple être utilisée pour le choix des parties et des paramètres, mais d'autres facteurs, tel qu'un temps d'indisponibilité de la machine en cas de panne ou encore un coût de la pièce de rechange pourront être pris en compte. Avantageusement, le fait de prendre une chaîne fonctionnelle dans son ensemble permet de limiter le nombre de capteurs de maintenance et ainsi de répondre au besoin de fiabilité nécessaire. Dans l'idéal, il faut pouvoir utiliser les capteurs déjà installés au niveau de la machine.

Le jumeau numérique reprend tout ou partie de la machine. En particulier, le jumeau numérique peut être, dans un aspect simplifié du procédé de l'invention, une modélisation numérique limitée à la partie à surveiller de la machine, mais il est bien entendu également envisagé selon l'invention que le jumeau numérique soit plus complexe, notamment une modélisation numérique incluant plusieurs parties de la machine à surveiller voire toutes les parties qui peuvent être surveillées sur la machine.

La modélisation du jumeau numérique est une simulation numérique de type multi-physique qui peut être réalisée par l'intermédiaire de suites logicielles, par exemple mais non exclusivement Altair^{®}, SIMLab^{®}, Roamaxtec^{®}, Matlab Simulink^{®}, ou encore Simscape^{®}. La granularité du jumeau numérique sera fonction du degré de maintenance envisagé. L'ensemble d'incidents prédéterminés des étapes e) et f) comprend tout ou partie des évènements qui peuvent avoir une influence sur la maintenance de la machine de type donné, notamment mais non exclusivement des pannes, des chocs, ou tout simplement une usure.

Le procédé de l'invention permet donc, dans une première phase d'entraînement sur une machine d'entraînement, de construire un jumeau numérique comprenant déjà un apprentissage des incidents de maintenance qui peuvent se produire, puis dans une deuxième phase de déterminer les capteurs nécessaires à la détection de ces incidents et enfin dans une troisième phase de faire évoluer ce jumeau numérique avec des données issues des données d'exploitation des machines du parc de machines, afin que le jumeau numérique s'approche le plus possible des machines dont on souhaite assurer la maintenance. Il suffit ensuite d'appliquer les données remontées des machines en exploitation au jumeau numérique pour effectuer une maintenance prédictive. On pourra ainsi injecter, après traitement mathématique, dans le jumeau numérique les données des capteurs de maintenance d'une machine spécifique du parc de machines, et utiliser les données correspondantes du jumeau numériques pour en déduire un degré d'usure de la machine spécifique et programmer le cas échéant une maintenance prédictive.

La prédiction peut également être directement intégrée dans chaque machine, un retour d'information de type durée de vie utile restante (Remaining Useful Life - RUL) étant indiquée par le véhicule.

Dans la dernière étape du procédé,

Un parc de machines disposant de fonctions de maintenance prédictive doit permettre d'améliorer la gestion de la maintenance et de l'emploi des machines.

La précision des prévisions réalisées sur les fonctions de surveillance a un impact important sur la gestion de la maintenance des machines.

Pour estimer le RUL (RUL - acronyme de l'anglais Remaining Useful Life ou durée de vie utile restante) d'une fonction prédictive, il existe deux approches distinctes.

Un première approche purement théorique est basée sur une approche statistique en lien avec la modélisation multi-physique. Cette approche prend en compte les temps moyens entre pannes (MTBF - acronyme de l'anglais Mean Time Between Failures) théorique ainsi que les profils d'emplois des machines pour en déterminer une durée de vie résiduelle.

Une deuxième approche est basée sur une approche pratique en lien direct avec les capteurs ou témoins d'usures et le modèle multi-physique.

Cette deuxième approche travaille en tâche de fond de la première approche et est prioritaire sur la première approche.

Selon la première approche, pour estimer le RUL de la fonction prédictive, la simulation dynamique basée sur des modèles de durée de vie du type lois de Weibull est utilisée. Ces lois mathématiques sont utilisées pour modéliser les durées de vie et les prédictions réalisées par les fonctions de surveillance, les HUMS (acronyme anglais de Health and Usage Monitoring System - système de surveillance de santé et d'utilisation).

Pour modéliser les effets de la maintenance prédictive, il faut modéliser les prédictions réalisées par les HUMS.

La génération des événements est basée sur la durée de vie : la loi de Weibull a deux paramètres qui sont le facteur d'échelle (η) et le facteur de forme (β). On pourra par exemple adopter η=1000 et β=2. D'autres valeurs peuvent être choisies, selon la pratique bien connue de la personne du métier.

Pour modéliser la qualité des prévisions, on utilise deux paramètres dont les valeurs sont tirées aléatoirement (modèle uniforme) : un taux d'erreur et une précision des prévisions. Ces deux paramètres sont exprimés sous la forme de pourcentages et sont appliqués à la durée de vie (ddv) générée par les lois de Weibull.

Ainsi, un taux d'erreur de prévision de 10% signifie que dans 10% des cas, la prévision est supérieure à la ddv réelle, et une précision par rapport à la ddv réelle de 20% signifie que l'erreur entre la valeur de la ddv réelle et la prévision est de 20%.

La caractérisation des lois de durée de vie et de leur prévision repose essentiellement sur l'analyse statistique des données. Dans un premier temps, la caractérisation des lois de prévision est basée sur des hypothèses et les connaissances des modèles de simulations. Les lois sont par la suite ajustées au fur et à mesure de la capitalisation des données du retour d'expérience. Ce retour d'expérience se fait en phase accélérée (en raison du caractère frugal du procédé de l'invention) lors de la phase de test fonctionnel et dysfonctionnel.

Cette approche permet d'estimer, par la simulation de scénarios d'analyse, les performances que doivent avoir les fonctions de surveillance, pour que la maintenance prédictive améliore la disponibilité des machines, et plus globalement facilite la gestion du parc de machines.

La deuxième approche, pratique, est en lien direct avec la phase d'analyse fonctionnelle et dysfonctionnelle du procédé frugal selon l'invention et permet par l'intermédiaire d'une analyse de capteurs (par exemple des témoins d'usures) de définir 3 états :
- premier état : tout est ok (aucune détection au niveau des capteurs). La prédiction est dans ce cas gérée par la première approche statistique ;
- deuxième état : début d'usure (détectée par les capteurs). Le RUL sera corrélé au profil d'emploi de la machine (nombre d'ouverture, t°, vibration...) et aux connaissances des systèmes experts. Ce RUL sera défini par une approche pratique et corrélée aux modèles multi physique. La prédiction est alors gérée par les témoins d'usure avec une approche simple de type seuil ou une analyse comparative de type « signature du signal ». Le RUL sera calculé en lien direct avec le cas d'usage ;
- troisième état : usure avérée (détectée par les capteurs). Il faut dans ce cas changer pour éviter un risque de panne.

Le procédé selon la présente invention a donc l'avantage, par rapport aux procédés existants, de traiter moins de données et d'être conforme à un modèle réaliste du modèle de machine faisant l'objet de la maintenance. Il peut donc trouver à s'appliquer à des parcs de véhicules peu utilisés ou avec un profil d'utilisation irrégulier présentant de fortes variations, comme un parc de véhicules militaires, mais peut également trouver application dans des parcs de véhicules civils, ayant une utilisation à la fois plus importante et plus régulière.

Selon l'invention, par machine, on entend tout système dynamique pouvant être modélisé, la modélisation étant l'association d'un système de commande (carte électronique associé à un logiciel de pilotage) qui pilote un actionneur (électrique, hydraulique, pneumatique...), lequel actionneur est à l'initiative du mouvement d'une chaîne cinématique (mécanique, mécatronique, hydraulique, pneumatique, électrique...).

A titre d'exemples non limitatifs, une machine selon l'invention peut être un véhicule, notamment un véhicule militaire, une chaîne automatisée, un convoyeur, un automate d'analyse (médicales, ...), un système de distribution (machine à café, ...), une centrale électrique, une centrale hydraulique, un appareil de production d'énergie (hydrolienne, éolienne...), des machines-outils... L'invention trouve à s'appliquer pour de nombreux types de machines.

Selon un mode de réalisation, le procédé comprend en outre, avant l'étape i), les étapes consistant à :
i01) équiper un groupe restreint de machines du parc de machines du groupe de capteurs de maintenance,
i02) relever périodiquement les données de mesure du groupe de capteurs de maintenance équipant chaque machine du groupe restreint de machines du parc de machines pour enrichir le jumeau numérique.

Cette étape facultative permet, dans une phase transitoire, d'améliorer davantage le jumeau numérique par injection des données de mesure issues des capteurs de maintenance du groupe restreint de machines dans le jumeau numérique, avant le déploiement du procédé dans la totalité du parc de machines.

Ici encore, la remontée de données du groupe restreint de machines au jumeau numérique se fera à haut débit pour rendre maximale la quantité de données apportée au jumeau numérique.

Selon un mode de réalisation, le groupe restreint de machines comprend entre 10 et 100 machines, de préférence entre 20 et 50 machines, de façon davantage préférée 30 machines. L'invention n'est toutefois pas limitée à cet égard et la personne du métier comprendra que l'invention est applicable à un parc de machines plus important que 100 machines.

Selon un mode de réalisation, le degré d'usure prédéterminé correspond au degré d'usure d'une machine du type donné sortant d'usine.

Ce degré d'usure peut être obtenu soit à partir d'une machine neuve sortant d'usine, soit à partir d'une machine remise en état. L'invention n'est toutefois pas limitée à un tel degré d'usure, un degré d'usure plus important pouvant être pris en compte lors de la modélisation du jumeau numérique. Ainsi, pour un parc de machines anciennes, on peut déterminer un degré d'usure minimal, ne correspondant pas au degré d'usure de recette d'usine, mais correspondant au degré d'usure minimal du parc de machines, pour modéliser le jumeau numérique. Le procédé de la présente invention a donc pour objet de s'appliquer à des parcs de machines nouvelles, mais également anciennes. Selon un mode de réalisation, la probabilité prédéterminée est comprise entre 70 % et 100 **%,** de préférence entre 85 % et 100 **%,** et est de façon davantage préférée supérieure à 90 %.

La probabilité prédéterminée dépendra de la partie à surveiller en compte, notamment de sa criticité dans la maintenance de la machine et du coût de réparation, comprenant les éventuelles pièces de rechange. Avantageusement, cette probabilité prédéterminée pourra être modifiée en fonction du comportement du modèle du jumeau numérique.

Selon un mode de réalisation, les paramètres mesurables sont au moins l'un parmi la température, la vibration, la pression, la déformation, la consommation en courant, la consommation en un fluide, la résistivité, un angle, une accélération, un degré de pollution, un taux d'humidité et un degré d'usure.

Selon un mode de réalisation, à l'étape j), les données de mesure du groupe de capteurs de maintenance équipant chaque machine du parc de machines sont relevées pour enrichir le jumeau numérique à une fréquence comprise entre 1 et 90 jours, de préférence entre 1 et 30 jours, de façon davantage préférée entre 1 et 15 jours.

La fréquence de remontée des données de mesure de capteurs de maintenance pour leur injection dans le jumeau numérique dépend de l'utilisation des machines : elle doit être corrélée au taux d'utilisation moyen des machines dans le parc de machines.

A titre d'alternative, il est bien entendu également possible de prévoir une remontée de données de mesure de capteurs de maintenance à chaque utilisation de la machine, ou à un nombre donné d'utilisations de la machine. Chaque machine intégrera alors un dispositif de calcul comprenant un compteur comptant les utilisations de la machine et déclenchant la remontée de données de mesure des capteurs de maintenance vers le jumeau numérique au bout d'un nombre d'utilisations prédéterminé, chaque remontée de données de mesure des capteurs de maintenance vers le jumeau numérique réinitialisant le compteur.

Le relevé de données des capteurs peut se faire localement ou à distance, sur demande ou à intervalles réguliers, les capteurs intégrant ou étant associés, le cas échéant, à des moyens de mémoire et de télécommunication. Une interface homme-machine peut être prévue pour le relevé des données, sur la machine ou déportée, avec de préférence un moyen de traitement des données, par exemple pour leur mise en forme avant injection dans le jumeau numérique.

Ainsi, les capteurs peuvent être constitués par ou associés à un ou plusieurs dispositifs de traitement de données, de type microcontrôleur, microprocesseur, processeur, processeur de signaux numériques, voire matrice prédiffusée programmable (FPGA) ou composant à application spécifique (ASIC), possiblement associé à des composants de mémoire et/ou de télécommunication, pour permettre le relevé des données de mesure.

Selon un mode de réalisation, la machine de type donné est un véhicule, en particulier un véhicule militaire.

Selon un mode de réalisation, la partie de véhicule est au moins l'un parmi un système d'armes, le système de climatisation et de chauffage, un système d'ouverture de porte, de trappe ou de fenêtre, un système d'ouverture/fermeture de rampe arrière, un train roulant, les pneus, les chenilles, le moteur, l'électronique embarquée, le bus CAN, la distribution motrice, la boîte de vitesse, le système de freinage, la batterie, un système d'avertissement sonore, un système d'avertissement lumineux, un niveau de liquide, un circuit hydraulique. L'invention n'est pas limitée à cet égard et peut trouver à s'appliquer à tout sous-ensemble comprenant des paramètres mesurables.

L'invention a également pour objet un procédé de maintenance prédictive d'un parc de machines hétérogène ayant des machines de types de machine différents, le procédé comprenant la mise en œuvre du procédé tel que décrit ci-dessus pour chaque type de machine du parc de machines.

On a ainsi un jumeau numérique par type de machine dans le parc.

Avantageusement, le procédé de l'invention peut être lié au progiciel de gestion intégré (ERP en anglais) de la société exploitant le parc de machines pour l'automatisation de l'approvisionnement des commandes.

Le procédé de l'invention permet également de planifier les opérations de maintenance, pour lisser la charge de maintenance, et de prévoir le stock nécessaire de pièces de rechange.

Le procédé de l'invention peut être mis en œuvre de manière centralisée, avec un seul jumeau numérique qui sert pour le parc de machines, ou déportée sur chaque machine, qui comprend alors les moyens nécessaires en termes de calcul, de mémoire et de moyens de communications pour envoyer ses données à un serveur qui met à jour le jumeau numérique, recevoir une copie à jour du jumeau numérique et réaliser une prédiction de maintenance.

L'invention a également pour objet un produit programme d'ordinateur comprenant des instructions qui, lorsque le programme est exécuté par un ordinateur, conduisent l'ordinateur à mettre en œuvre un procédé tel que décrit ci-dessus.

L'invention a également pour objet un support lisible par ordinateur comprenant des instructions qui, lorsque le programme est exécuté par un ordinateur, conduisent l'ordinateur à mettre en œuvre un procédé tel que décrit ci-dessus.

Pour mieux illustrer l'objet de la présente invention, des modes de réalisation préférés sont décrits ci-après, à titre illustratif et non limitatif, conjointement avec les dessins annexés. Sur ces dessins :
[Fig. 1] est un schéma-bloc du procédé selon un mode de réalisation l'invention.
[Fig. 2] est un schéma-bloc du procédé selon un autre mode de réalisation l'invention.

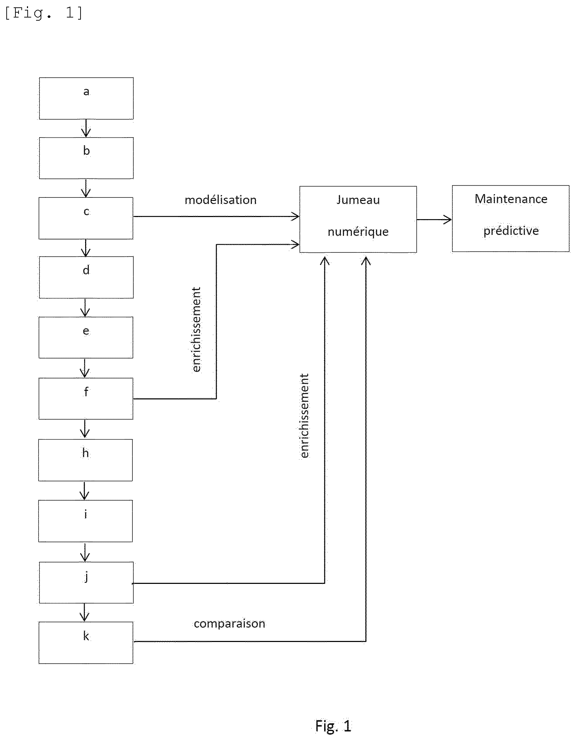

Si l'on se réfère à la Figure 1, on peut voir que l'on a représenté un procédé de maintenance prédictive selon la présente invention.

Afin d'illustrer l'invention sur un exemple précis, le procédé sera mis en œuvre pour une machine de type véhicule, en particulier un véhicule militaire. La personne du métier comprendra que cet exemple n'est qu'illustratif et ne limite aucunement l'application de l'invention à des véhicules, l'invention pouvant trouver à s'appliquer à tout type de machine, l'exemple du véhicule n'introduisant aucune limitation qui ferait que l'invention n'est pas applicable à d'autres machines.

Le procédé comprend les étapes suivantes :
Etape a : identifier, pour le type de véhicule donné, au moins une partie de véhicule à surveiller qui est affectée par l'usure du véhicule.

Dans cette étape, chaque partie de véhicule à surveiller est choisie en fonction de l'objectif de maintenance prédictive visé, en déterminant les parties du véhicule à surveiller. Des facteurs de criticité de la partie, de temps d'indisponibilité en cas de panne ou de coût de pièce de rechange peuvent ainsi notamment être pris en compte. Il est bien entendu que la partie peut être élémentaire, par exemple un pneu, le démarreur, ou comprendre plusieurs éléments, par exemple un roue ou le moteur, voire une chaîne fonctionnelle, par exemple la chaîne de transmission, le système de chauffage/climatisation, le circuit électrique complet, ou plusieurs parties en interaction, par exemple la transmission et le train roulant. Il est bien entendu possible de choisir plusieurs parties.

Etape b : identifier l'ensemble des paramètres mesurables de l'au moins une partie de véhicule à surveiller.

Dans cette étape, une fois chaque partie à surveiller identifiée, les paramètres mesurables relatifs à chaque partie à identifier sont répertoriés.

Etape c : modéliser un jumeau numérique du type de véhicule donné comprenant un modèle numérique de l'au moins une partie de véhicule à surveiller.

Dans cette étape, le jumeau numérique du type de véhicule donné est modélisé, et comprend un modèle numérique de chaque partie à surveiller.

Les étapes suivantes sont effectuées sur un véhicule dit d'entraînement du type donné ayant un degré d'usure prédéterminé. Ce degré d'usure sera de préférence un degré d'usure de type recette d'usine (véhicule neuf).

Etape d : disposer des capteurs pour mesurer chaque paramètre mesurable de l'ensemble des paramètres mesurables de l'au moins une partie de véhicule à surveiller.

Cette étape consiste à sur instrumenter, par un plan d'instrumentation, la partie à mesurer pour s'assurer de disposer de l'ensemble des mesures des paramètres mesurables, en particulier permettant de révéler une usure, une dérive par rapport au fonctionnement normal. Il faudra prendre en compte les capteurs déjà présents sur le véhicule et ajouter, le cas échéant, les capteurs additionnels externes nécessaires. Le plan d'instrumentation permet en particulier de caractériser et de spécifier le besoin sur le type et les spécificités des capteurs à mettre en œuvre (amplitude, bande passante, précision, répétabilité...). Plusieurs plans d'instrumentation avec des capteurs ayant des caractéristiques différentes peuvent être mis en œuvre pour optimiser la mesure des paramètres mesurables de la partie à surveiller. Dans l'idéal, un capteur doit être utilisé pour surveiller plusieurs composants de la partie à surveiller. Dans l'idéal, l'information permettant de définir la durée de vie utile restante doit provenir de plusieurs paramètres mesurables afin de rendre la prédiction plus robuste.

Etape e : simuler un ensemble d'incidents prédéterminés sur le véhicule d'entraînement et relever les données de mesure des capteurs pour chaque incident prédéterminé.

Les incidents prédéterminés peuvent être des pannes, connues car déjà rencontrées, ou inconnues, des chocs ou une usure (pneu, corrosion...).

Etape f : enrichir le jumeau numérique avec les données de mesure des capteurs pour chaque incident prédéterminé de l'ensemble d'incidents prédéterminés.

Les données de mesure du véhicule d'entraînement sont remontées et injectées dans le jumeau numérique pour que son comportement soit le plus fidèle possible à celui d'un véhicule réel du parc de véhicules dont on souhaite assurer la maintenance prédictive.

Le moteur d'intelligence artificielle, ou algorithme d'apprentissage, utilisé pour traiter ces données du jumeau numérique peut notamment, mais non exclusivement, être des librairies utilisées en science des données, notamment des librairies en langage Python ^{®} utilisées en intelligence artificielle, notamment mais non exclusivement Keras, pour créer des modèles de réseaux de neurones utilisée avec la librairie TensorFlow pour optimiser les calculs, PyTorch, également pour créer des modèles de réseaux de neurones, ou encore Scikit-Learn, implémentant des algorithmes paramétrables ou en langage R avec le package Caret, par exemple, qui permet d'appeler de nombreuses méthodes d'apprentissage machine en offrant une interface unifiée et qui comporte des fonctions utilitaires diverses.

Les données seront de préférence stockées dans un lac de données, à savoir un système ou répertoire de stockage de données brutes. Le lac de données peut stocker des données de différents types et permet de stocker une très grande quantité de données brutes dans le format natif pour une durée indéterminée. Cette méthode de stockage permet de faciliter la cohabitation entre les différents schémas et formats de données.

Plusieurs apprentissages sont envisagés, de préférence de manière complémentaires :
- apprentissage supervisé : basé sur un modèle représentatif pour s'entraîner, il consiste à apprendre sur une base de données annotées ;
- apprentissage non supervisé : le bon modèle représentatif est recherché par apprentissage automatique, sans avoir de données annotées.

Au niveau du post traitement, il est ainsi possible de faire ressortir des nouvelles corrélations de pannes non imaginées lors de la mise en place du jumeau numérique de la partie à surveiller : par exemple, le fait de rouler avec le frein avant droit partiellement bloqué entraîne une usure au niveau de la boîte de vitesses.

Les concepts normatifs (notamment FMDS) liés aux vieillissements des équipements peuvent être intégrés dans les lois de prédiction pour les améliorer.

On voit ainsi que le jeu de données d'apprentissage est construit au fur et à mesure à partir des données issues du véhicule d'entraînement.

Etape g : définir, pour chaque incident prédéterminé simulé de l'ensemble d'incidents prédéterminés, un seuil de détection.

Ici encore, le seuil de détection sera fonction de la criticité de la partie à surveiller. Pour une partie très critique, le seuil de détection pourra être précis tandis que pour une partie moins critique, le seuil pourra être moins précis. Egalement, on pourra situer le seuil de détection plus ou moins loin de la panne attendue, en fonction du temps de réparation et du temps d'immobilisation attendus.

Etape h : identifier parmi les capteurs, pour chaque incident prédéterminé simulé de l'ensemble d'incidents prédéterminés, un groupe de capteurs dits de maintenance permettant de détecter le seuil de détection avec une probabilité prédéterminée.

Cette étape est une étape de traitement de données permettant de limiter le nombre de capteurs nécessaires à la détection des seuils de détection souhaités.

A partie de l'étape qui suit, les capteurs de maintenance sont installés sur l'ensemble des véhicules du parc pour un déploiement du procédé sur l'ensemble du parc de véhicules. Etape i : équiper l'ensemble des véhicules du parc de véhicules du groupe de capteurs de maintenance.

Etape j : relever périodiquement les données de mesure du groupe de capteurs de maintenance équipant chaque véhicule du parc de véhicules pour enrichir le jumeau numérique. Cette étape permet une amélioration du jumeau numérique sur un temps long. Une fois encore, les données d'apprentissage du jumeau numérique sont construites au fur et à mesure, cette fois sur l'ensemble des véhicules du parc de véhicules.

Etape k : pour chaque véhicule du parc de véhicules, relever périodiquement les données de mesure du groupe de capteurs de maintenance l'équipant et appliquer les données de mesure au jumeau numérique pour déduire un besoin de maintenance.

C'est l'étape du procédé qui permet la maintenance prédictive. Chaque véhicule du parc de véhicules est comparé au jumeau numérique pour déduire une durée de vie utile restante (Remaining Useful Life ou RUL en anglais) et donc la probabilité de survenance d'une panne pour initier en conséquence une action de maintenance prédictive. L'étape de prédiction peut être réalisée sur le véhicule, auquel cas celui-ci devra disposer des moyens de calcul, mémoire et communication nécessaires, le jumeau numérique étant intégré dans les moyens de calcul et mis à jour au fur et à mesure de l'évolution du jumeau numérique du parc de véhicule par une mise à jour par les moyens de communication, lesquels peuvent donc à la fois servir à relever les données vers un jumeau numérique du parc de véhicules centralisé, et à mettre à jour une copie sur le véhicule, du jumeau numérique du parc de véhicules centralisé. L'étape de prédiction peut également être réalisée de manière déportée sur un ordinateur qui gère le jumeau numérique du parc de véhicules. Ce sera notamment le cas lorsqu'il est compliqué d'implémenter une copie du jumeau numérique centralisé sur chaque véhicule.

Etant donné l'apprentissage du procédé de l'invention sur un temps long dans les dernières étapes, on comprend que le procédé sera de plus en plus précis en fonction du temps de déploiement sur un parc de véhicules.

Il est à noter qu'un jumeau numérique déployé sur un parc de véhicules d'un type donné selon le procédé de l'invention, quel que soit son état de maturité, pourra être déployé sur un autre parc de véhicules du même type, sans nécessairement avoir à reproduire les étapes a à h, avec une adaptation minimale.

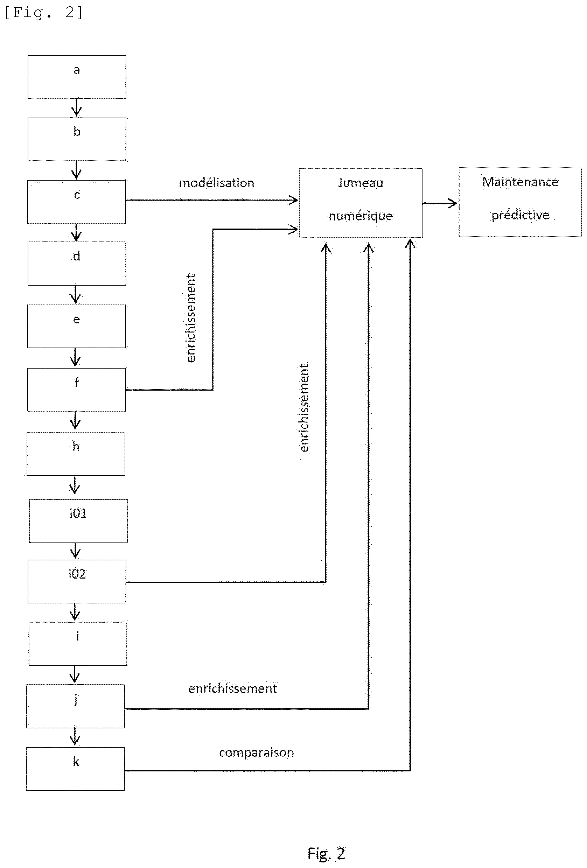

Dans le mode de réalisation représenté sur la Figure 2, on retrouve les mêmes étapes que dans les étapes décrites en Figure 1 et qui ne seront pas décrites plus en détail ici. Des étapes i01 et i02 sont introduites avant l'étape i, pour améliorer le jumeau numérique avant le déploiement et l'exploitation du procédé sur la totalité du parc de véhicules :
Etape i01 : équiper un groupe restreint de véhicules du parc de véhicules du groupe de capteurs de maintenance.
Etape i02 : relever périodiquement les données de mesure du groupe de capteurs de maintenance équipant chaque véhicule du groupe restreint de véhicules du parc de véhicules pour enrichir le jumeau numérique.

Ces étapes additionnelles permettent de rendre le jumeau numérique plus robuste avant son déploiement sur le parc complet de véhicules.

Matériellement, le procédé de l'invention peut être mis en œuvre par l'intermédiaire d'un kit HUMS (acronyme anglais de Health and Usage Monitoring System - système de surveillance de santé et d'utilisation), qui est un boîtier électronique qui permet d'enregistrer le bus CAN existant et de conditionner et d'enregistrer les signaux de capteurs ajoutés et d'exécuter un algorithme de prédiction. Dans ce cas, le jumeau numérique centralisé du parc de véhicules sera mis à jour périodiquement et la prédiction sera réalisée sur le véhicule, de manière déportée.

Comme indiqué plus haut, l'invention n'est pas limitée aux parcs de véhicules, et peut s'appliquer à tous parcs de machines, et plus généralement à tous parcs de systèmes dynamiques pouvant être modélisés, la modélisation étant l'association d'un système de commande (carte électronique associé à un logiciel de pilotage) qui pilote un actionneur (électrique, hydraulique, pneumatique...), lequel actionneur est à l'initiative du mouvement d'une chaîne cinématique (mécanique, mécatronique, hydraulique, pneumatique, électrique...).

A titre d'exemples non limitatifs, une machine selon l'invention peut être un véhicule, notamment un véhicule militaire, une chaîne automatisée, un convoyeur, un automate d'analyse (médicales, ...), un système de distribution (machine à café, ...), une centrale électrique, une centrale hydraulique, un appareil de production d'énergie (hydrolienne, éolienne...), des machines-outils...

## Revendications

1. Procédé de maintenance prédictive pour un parc de machines homogène, les machines du parc de machines étant d'un même type de machine donné, le procédé comprenant les étapes consistant à :
a) identifier, pour le type de machine donné, au moins une partie de machine à surveiller qui est affectée par l'usure de la machine,
b) identifier l'ensemble des paramètres mesurables de l'au moins une partie de machine à surveiller,
c) modéliser un jumeau numérique du type de machine donné comprenant un modèle numérique de l'au moins une partie de machine à surveiller et,
sur une machine dit d'entraînement du type de machine donné ayant un degré d'usure prédéterminé :
d) disposer des capteurs pour mesurer chaque paramètre mesurable de l'ensemble des paramètres mesurables de l'au moins une partie de machine à surveiller,
e) simuler un ensemble d'incidents prédéterminés sur la machine d'entraînement et relever les données de mesure des capteurs pour chaque incident prédéterminé,
f) enrichir le jumeau numérique avec les données de mesure des capteurs pour chaque incident prédéterminé de l'ensemble d'incidents prédéterminés,
g) définir, pour chaque incident prédéterminé simulé de l'ensemble d'incidents prédéterminés, un seuil de détection,
h) identifier parmi les capteurs, pour chaque incident prédéterminé simulé de l'ensemble d'incidents prédéterminés, un groupe de capteurs dits de maintenance permettant de détecter le seuil de détection avec une probabilité prédéterminée,
i) équiper l'ensemble des machines du parc de machines du groupe de capteurs de maintenance,
j) relever périodiquement les données de mesure du groupe de capteurs de maintenance équipant chaque machine du parc de machines pour enrichir le jumeau numérique,
k) pour chaque machine du parc de machines, relever périodiquement les données de mesure du groupe de capteurs de maintenance l'équipant et appliquer les données de mesure au jumeau numérique pour déduire un besoin de maintenance.

2. Procédé de maintenance prédictive selon la revendication 1, **caractérisé par le fait qu'**il comprend en outre, avant l'étape i), les étapes consistant à :
i01) équiper un groupe restreint de machines du parc de machines du groupe de capteurs de maintenance,
i02) relever périodiquement les données de mesure du groupe de capteurs de maintenance équipant chaque machine du groupe restreint de machines du parc de machines pour enrichir le jumeau numérique.

3. Procédé de maintenance prédictive selon la revendication 2, **caractérisé par le fait que** le groupe restreint de machines comprend entre 10 et 100 machines, de préférence entre 20 et 50 machines, de façon davantage préférée 30 machines.

4. Procédé de maintenance prédictive selon l'une des revendications 1 à 3, **caractérisé par le fait que** le degré d'usure prédéterminé correspond au degré d'usure d'une machine du type donné sortant d'usine.

5. Procédé de maintenance prédictive selon l'une des revendications 1 à 4, **caractérisé par le fait que** la probabilité prédéterminée est comprise entre 70 % et 100 %, de préférence entre 85 % et 100 %, et est de façon davantage préférée supérieure à 90 %.

6. Procédé de maintenance prédictive selon l'une des revendications 1 à 5, **caractérisé par le fait que** les paramètres mesurables sont au moins l'un parmi la température, la vibration, la pression, la déformation, la consommation en courant, la consommation en un fluide, la résistivité, un angle, une accélération, un degré de pollution, un taux d'humidité et un degré d'usure.

7. Procédé de maintenance prédictive selon l'une des revendications 1 à 6, **caractérisé par le fait qu'**à l'étape j), les données de mesure du groupe de capteurs de maintenance équipant chaque machine du parc de machines sont relevées pour enrichir le jumeau numérique à une fréquence comprise entre 1 et 90 jours , de préférence entre 1 et 30 jours, de façon davantage préférée entre 1 et 15 jours

8. Procédé de maintenance prédictive selon l'une des revendications 1 à 7, **caractérisé par le fait que** la machine de type donné est un véhicule, en particulier un véhicule militaire.

9. Procédé de maintenance prédictive selon la revendication 8, **caractérisé par le fait que** la partie de véhicule est au moins l'un parmi un système d'armes, le système de climatisation et de chauffage, un système d'ouverture de porte, de trappe ou de fenêtre, un système d'ouverture/fermeture de rampe arrière, un train roulant, les pneus, les chenilles, le moteur, l'électronique embarquée, le bus CAN, la distribution motrice, la boîte de vitesse, le système de freinage, la batterie, un système d'avertissement sonore, un système d'avertissement lumineux, un niveau de liquide, un circuit hydraulique.

10. Procédé de maintenance prédictive d'un parc de machines hétérogène ayant des machines de types de machine différents, **caractérisé par le fait qu'**il comprend la mise en œuvre du procédé selon l'une des revendications 1 à 9 pour chaque type de machine du parc de machines.

11. Produit programme d'ordinateur comprenant des instructions qui, lorsque le programme est exécuté par un ordinateur, conduisent l'ordinateur à mettre en œuvre un procédé selon l'une des revendications 1 à 10.

12. Support lisible par ordinateur comprenant des instructions qui, lorsque le programme est exécuté par un ordinateur, conduisent l'ordinateur à mettre en œuvre un procédé selon l'une des revendications 1 à 10.

## Patentansprüche

1. Prädiktives Wartungsverfahren für einen homogenen Maschinenpark, wobei die Maschinen des Maschinenparks von einem gegebenen gleichen Maschinentyp sind, das Verfahren umfassend die Schritte, die aus Folgendem bestehen:
a) Identifizieren, für den gegebenen Maschinentyp mindestens eines zu überwachenden Maschinenteils, der von dem Verschleiß der Maschine betroffen ist,
b) Identifizieren der Gesamtheit der messbaren Parameter des mindestens einen zu überwachenden Maschinenteils,
c) Modellieren eines digitalen Zwillings des gegebenen Maschinentyps, umfassend ein digitales Modell des mindestens einen zu überwachenden Maschinenteils, und
an einer sogenannten Trainingsmaschine des gegebenen Maschinentyps, die einen vorbestimmten Verschleißgrad aufweist:
d) Anordnen von Sensoren zum Messen von jedem messbaren Parameter der Reihe von messbaren Parametern des mindestens einen zu überwachenden Maschinenteils,
e) Simulieren einer Reihe von vorbestimmten Ereignissen an der Trainingsmaschine und Erfassen der Messdaten der Sensoren für jedes vorbestimmte Ereignis,
f) Anreichern des digitalen Zwillings mit den Messdaten der Sensoren für jedes vorbestimmten Ereignis der Reihe von vorbestimmten Ereignissen,
g) Definieren, für jedes simuliertes vorbestimmte Ereignis der Reihe von vorbestimmten Ereignissen, eines Erfassungsschwellenwerts,
h) Identifizieren, unter den Sensoren für jedes simulierte vorbestimmte Ereignis der Reihe von vorbestimmten Ereignisse eine Gruppe von sogenannten Wartungssensoren identifizieren, die es ermöglichen, den Erfassungsschwellenwert mit einer vorbestimmten Wahrscheinlichkeit zu erfassen,
i) Ausstatten aller Maschinen des Maschinenparks der Gruppe mit Wartungssensoren,
j) periodisch Ablesen der Messdaten der Gruppe von Wartungssensoren, mit denen jede Maschine in dem Maschinenpark ausgestattet ist, um den digitalen Zwilling anzureichern,
k) für jede Maschine in dem Maschinenpark, periodisches Ablesen der Messdaten der Gruppe von Wartungssensoren, mit denen sie ausgestattet ist, und Anwenden der Messdaten auf den digitalen Zwilling, um einen Wartungsbedarf abzuleiten.

2. Prädiktives Wartungsverfahren nach Anspruch 1, **dadurch gekennzeichnet, dass** es vor Schritt i) ferner die Schritte umfasst, die aus Folgendem bestehen:
i01) Ausstatten einer begrenzten Gruppe von Maschinen aus dem Maschinenpark der Gruppe mit Wartungssensoren,
i02) periodisches Ablesen der Messdaten der Gruppe von Wartungssensoren, mit denen jede Maschine der begrenzten Gruppe von Maschinen des Maschinenparks ausgestattet ist, um den digitalen Zwilling anzureichern.

3. Prädiktives Wartungsverfahren nach Anspruch 2, **dadurch gekennzeichnet, dass** die begrenzte Gruppe von Maschinen zwischen 10 und 100 Maschinen, vorzugsweise zwischen 20 und 50 Maschinen, bevorzugter 30 Maschinen, umfasst.

4. Prädiktives Wartungsverfahren nach einem der Ansprüche 1 bis 3, **dadurch gekennzeichnet, dass** der vorbestimmte Verschleißgrad dem Verschleißgrad einer Maschine des gegebenen Typs aus dem Werk entspricht.

5. Prädiktives Wartungsverfahren nach einem der Ansprüche 1 bis 4, **dadurch gekennzeichnet, dass** die vorbestimmte Wahrscheinlichkeit zwischen 70 % und 100 %, vorzugsweise zwischen 85 % und 100 %, liegt und bevorzugter größer als 90 % ist.

6. Prädiktives Wartungsverfahren nach einem der Ansprüche 1 bis 5, **dadurch gekennzeichnet, dass** die messbaren Parameter mindestens eines von Temperatur, Vibration, Druck, Deformation, Stromverbrauch, Fluidverbrauch, spezifischem Widerstand, Winkel, Beschleunigung, Verschmutzungsgrad, Feuchtigkeitsgehalt und Verschleißgrad sind.

7. Prädiktives Wartungsverfahren nach einem der Ansprüche 1 bis 6, **dadurch gekennzeichnet, dass** in Schritt j) die Messdaten der Gruppe von Wartungssensoren, mit denen jede Maschine des Maschinenparks ausgestattet ist, abgelesen werden, um den digitalen Zwilling mit einer Häufigkeit zwischen 1 und 90 Tagen, vorzugsweise zwischen 1 und 30 Tagen, bevorzugter zwischen 1 und 15 Tagen, anzureichern.

8. Prädiktives Wartungsverfahren nach einem der Ansprüche 1 bis 7, **dadurch gekennzeichnet, dass** die Maschine des gegebenen Typs ein Fahrzeug, insbesondere ein Militärfahrzeug, ist.

9. Prädiktives Wartungsverfahren nach Anspruch 8, **dadurch gekennzeichnet, dass** das Fahrzeugteil mindestens eines von einem Waffensystem, dem Klimaanlagen- und Heizsystem, einem Tür-, Klappen- oder Fensteröffnungssystem, einem Heckrampenöffnungs-/schließsystem, Fahrwerk, den Reifen, Raupen, dem Motor, der Bordelektronik, dem CAN-Bus, der Antriebsverteilung, dem Getriebe, Bremssystem, der Batterie, einem akustischem Warnsystem, einem Lichtwarnsystem, einem Flüssigkeitsstand, einem Hydraulikkreislauf ist.

10. Prädiktives Wartungsverfahren eines heterogenen Maschinenparks, der Maschinen unterschiedlicher Maschinentypen aufweist, **dadurch gekennzeichnet, dass** es die Durchführung des Verfahrens nach einem der Ansprüche 1 bis 9 für jeden Maschinentyp des Maschinenparks umfasst.

11. Rechnerprogrammprodukt
umfassend Anweisungen, die, wenn das Programm von einem Rechner ausgeführt wird, den Rechner veranlassen, ein Verfahren nach einem der Ansprüche 1 bis 10 durchzuführen.

12. Rechnerlesbares Medium, umfassend Anweisungen, die, wenn das Programm von einem Rechner ausgeführt wird, den Rechner veranlassen, ein Verfahren nach einem der Ansprüche 1 bis 10 durchzuführen.

## Claims

1. A predictive maintenance method for a homogeneous machine fleet, the machines in the machine fleet being of the same given type of machine, the method comprising the steps consisting in:
a) identifying, for the given type of machine, at least one machine part to be monitored which is affected by wear of the machine,
b) identifying the set of measurable parameters of the at least one machine part to be monitored,
c) modeling a digital twin of the given machine type comprising a digital model of the at least one machine part to be monitored, and,
on a so-called training machine of the given machine type having a predetermined degree of wear:
d) providing sensors to measure each measurable parameter of the set of measurable parameters of the at least one machine part to be monitored,
e) simulating a set of predetermined incidents on the training machine and recording the measurement data from the sensors for each predetermined incident,
f) enriching the digital twin with the measurement data from the sensors for each predetermined incident of the set of predetermined incidents,
g) defining, for each simulated predetermined incident of the set of predetermined incidents, a detection threshold,
h) identifying among the sensors, for each simulated predetermined incident of the set of predetermined incidents, a group of so-called maintenance sensors making it possible to detect the detection threshold with a predetermined probability,
i) equipping all the machines in the machine fleet with the group of maintenance sensors,
j) periodically recording the measurement data from the group of maintenance sensors equipping each machine in the machine fleet to enrich the digital twin,
k) for each machine in the machine fleet, periodically recording the measurement data from the group of maintenance sensors equipping it and applying the measurement data to the digital twin to deduce a maintenance need.

2. The predictive maintenance method according to claim 1, **characterized in that** it further comprises, before step i), the steps consisting in:
i01) equipping a restricted group of machines from the machine fleet with the group of maintenance sensors,
i02) periodically recording the measurement data from the group of maintenance sensors equipping each machine in the restricted group of machines in the machine fleet to enrich the digital twin.

3. The predictive maintenance method according to claim 2, **characterized in that** the restricted group of machines comprises between 10 and 100 machines, preferably between 20 and 50 machines, more preferably 30 machines.

4. The predictive maintenance method according to one of claims 1 to 3, **characterized in that** the predetermined degree of wear corresponds to the degree of wear of a machine of the given type ex factory.

5. The predictive maintenance method according to one of claims 1 to 4, **characterized in that** the predetermined probability is between 70% and 100%, preferably between 85% and 100%, and is more preferably greater than 90%.

6. The predictive maintenance method according to one of claims 1 to 5, **characterized in that** the measurable parameters are at least one of temperature, vibration, pressure, deformation, current consumption, fluid consumption, resistivity, angle, acceleration, degree of pollution, humidity level and degree of wear.

7. The predictive maintenance method according to one of claims 1 to 6, **characterized in that** in step j), the measurement data from the group of maintenance sensors equipping each machine in the machine fleet are recorded to enrich the digital twin at a frequency of between 1 and 90 days, preferably between 1 and 30 days, more preferably between 1 and 15 days.

8. The predictive maintenance method according to one of claims 1 to 7, **characterized in that** the machine of the given type is a vehicle, in particular a military vehicle.

9. The predictive maintenance method according to claim 8, **characterized in that** the vehicle part is at least one of a weapons system, the air conditioning and heating system, a door, hatch or window opening system, a rear ramp opening/closing system, a running gear, tires, tracks, the engine, on-board electronics, CAN bus, power distribution, gearbox, braking system, battery, an audible warning system, a light warning system, a liquid level, a hydraulic circuit.

10. A predictive maintenance method for a heterogeneous machine fleet having machines of different machine types, **characterized in that** it comprises the implementation of the method according to one of claims 1 to 9 for each type of machine in the machine fleet.

11. A computer program product comprising instructions which, when the program is executed by a computer, cause the computer to implement a method according to one of claims 1 to 10.

12. A computer-readable medium comprising instructions which, when the program is executed by a computer, cause the computer to implement a method according to one of claims 1 to 10.
